# EUROPÄISCHE PATENTANMELDUNG

(11) **EP 4 729 821 A1**
(43) Veröffentlichungstag der Anmeldung: **22.04.2026**
(21) Anmeldenummer: 24207548.9
(22) Anmeldetag: 18.10.2024
(51) Int. Cl.: F16L 55/033

(54) **KOMPENSATOR, VERFAHREN ZUM BESTIMMEN EINER SHORE-HÄRTE UND KOMPENSATORSYSTEM**

(71) Anmelder: Aborra AG, 8152 Opfikon (CH)
(72) Erfinder: Civelek, Resat, 8803 Rüschlikon (CH); Adel, Amor, 6020 Emmenbrücke (CH)
(74) Vertreter: Keller Schneider Patent- und Markenanwälte AG

(57) **Zusammenfassung**

Die Erfindung betrifft einen Kompensator (1, 13) zum Anschluss an mindestens eine Rohrleitung, wobei der Kompensator 1) zwei endseitig angeordnete Anschlusselemente (2) und 2) einen aus einem Elastomer geformten Verbindungsabschnitt (3) zwischen den zwei Anschlusselementen (2) aufweist, wobei der Verbindungsabschnitt (3) mindestens einen Faltenbalg (4) aufweist, wobei der Verbindungsabschnitt (3) einen inneren Bereich (5) zumindest teilweise umgibt und eine Innenseite (6) und eine Aussenseite (7) aufweist, wobei die Innenseite (6) dem inneren Bereich (5) zugewandt ist und die Aussenseite (7) einem äusseren Bereich (8) ausserhalb des Kompensators (1, 13) zugewandt ist, wobei der Verbindungsabschnitt (3) zwei Öffnungen (9) aufweist, wobei durch die zwei Öffnungen (9) der innere Bereich (5) mit dem äusseren Bereich (8) verbunden ist, wobei eine Ausdehnungslinie (10) zentral durch den inneren Bereich (5) zwischen den Öffnungen (9) verläuft, und wobei jeder Faltenbalg des mindestens einen Faltenbalges (4) so ausgebildet ist, dass, der Ausdehnungslinie (10) folgend, ein Durchmesser (16) des vom jeweiligen Faltenbalg (4) umgebenen Teils des inneren Bereichs (5) zumindest einmal a) zuerst von einem Minimum zu einem Maximum ansteigt und dann b) von dem Maximum zum Minimum abfällt, wobei der Kompensator (1, 13) auf der Aussenseite (7) mindestens eine aus dem Elastomer geformte lokale Erhöhung (11) aufweist, wobei jede lokale Erhöhung der mindestens einen lokalen Erhöhung (11) eine von der Aussenseite (7) beabstandete Oberfläche (12) aufweist, und wobei die mindestens eine lokale Erhöhung (11) für eine Härtemessung des Verbindungsabschnitts (3) des Kompensators (1, 13) ausgebildet ist. Die Erfindung betrifft auch ein Verfahren zum Bestimmen einer Shore-Härte des Verbindungsabschnitts (3) des Kompensators (1, 13) und ein Kompensatorsystem.

## Beschreibung

### Technisches Gebiet

Die Erfindung betrifft einen Kompensator zum Anschluss an mindestens eine Rohrleitung, ein Verfahren zum Bestimmen einer Shore-Härte des Verbindungsabschnitts eines Kompensators und ein Kompensatorsystem.

### Stand der Technik

Kompensatoren zum Einsatz in Rohrleitungssystemen sind verbreitet und werden häufig zur Vibrationsdämpfung verwendet bzw. allgemeiner zum Ausgleich von in Rohrleitungssystemen auftretenden Bewegungen. Im Stand der Technik sind dabei Kompensatoren bekannt, die Elastomere aufweisen, wobei Elastomere vorteilhafte Eigenschaften insbesondere im Hinblick auf ihre Verformbarkeit aufweisen.

Nachteilig an Elastomeren ist, dass sie einem Alterungsprozess unterworfen sind und im Laufe der Zeit verspröden und dadurch üblicherweise härter werden, wodurch ihre Biegsamkeit reduziert wird und damit ihre Fähigkeit zur Schwingungskontrolle. Eine solche Versprödung kann beispielsweise in einem Anstieg eines Shore-Werts des Elastomers im Laufe der Zeit abgebildet werden. Üblicherweise wird der Alterungsprozess heutzutage durch visuelle und/oder taktile Inspektion ermittelt, wobei eine solche visuelle und/oder taktile Inspektion nur eingeschränkte Informationen über den Zustand des Elastomers bereitstellen kann - insbesondere können durch visuelle und/oder taktile Inspektion nur schlecht langfristige Trends im Alterungsprozess des Elastomers erkannt werden; eine visuelle und/oder taktile Inspektion ist weiter sehr subjektiv und vom Wissen und der Erfahrung des inspizierenden Fachmanns abhängig.

### Darstellung der Erfindung

Aufgabe der Erfindung ist es, einen Kompensator, ein Verfahren zum Bestimmen einer Shore-Härte und ein Kompensatorsystem bereitzustellen, die zumindest einige der aus dem Stand der Technik bekannten Nachteile beheben.

Die Lösung der Aufgabe ist durch die Merkmale der Ansprüche 1, 14 und 15 definiert. Gemäss einem ersten Aspekt der Erfindung betrifft die Erfindung einen Kompensator zum Anschluss an mindestens eine Rohrleitung, wobei der Kompensator 1) zwei endseitig angeordnete Anschlusselemente und 2) einen aus einem Elastomer geformten Verbindungsabschnitt zwischen den zwei Anschlusselementen aufweist, wobei der Verbindungsabschnitt mindestens einen Faltenbalg aufweist, wobei der Verbindungsabschnitt einen inneren Bereich zumindest teilweise umgibt und eine Innenseite und eine Aussenseite aufweist, wobei die Innenseite dem inneren Bereich zugewandt ist und die Aussenseite einem äusseren Bereich ausserhalb des Kompensators zugewandt ist, wobei der Verbindungsabschnitt zwei Öffnungen aufweist, wobei durch die zwei Öffnungen der innere Bereich mit dem äusseren Bereich verbunden ist, wobei eine Ausdehnungslinie zentral durch den inneren Bereich zwischen den Öffnungen verläuft, und wobei jeder Faltenbalg des mindestens einen Faltenbalges so ausgebildet ist, dass, der Ausdehnungslinie folgend, ein Durchmesser des vom jeweiligen Faltenbalg umgebenen Teils des inneren Bereichs zumindest einmal a) zuerst von einem Minimum zu einem Maximum ansteigt und dann b) von dem Maximum zum Minimum abfällt, und wobei der Kompensator auf der Aussenseite mindestens eine aus dem Elastomer geformte lokale Erhöhung aufweist, wobei jede lokale Erhöhung der mindestens einen lokalen Erhöhung eine von der Aussenseite beabstandete Oberfläche aufweist, und wobei die mindestens eine lokale Erhöhung für eine Härtemessung des Verbindungsabschnitts des Kompensators ausgebildet ist.

Der erfindungsgemässe Kompensator kann vorzugsweise in Wärmepumpeneinrichtungen installiert werden und dabei zu einer Schwingungskontrolle und Entkopplung beitragen bzw. allgemeiner zum Ausgleich von in Rohrleitungssystemen auftretenden Bewegungen. Beispielsweise kann der erfindungsgemässe Kompensator durch ein erstes Anschlusselement der zwei Anschlusselemente mit einer Wärmepumpe und durch ein zweites Anschlusselement der zwei Anschlusselemente mit einer Rohrleitung verbunden werden, so dass ein Fluid auf dem Weg zwischen der Wärmepumpe und der Rohrleitung durch den erfindungsgemässen Kompensator fliessen kann. Die zwei Anschlusselemente können dabei jeweils beispielsweise, wie aus dem Stand der Technik bekannt, als Flansche ausgebildet sein; die zwei Anschlusselemente können jedoch auch dergestalt ausgebildet sein, dass der erfindungsgemässe Kompensator per Verschraubung mit einer Rohrleitung oder einer Wärmepumpe verbunden werden kann, wobei grundsätzlich auch andere Formen von Anschlusselementen möglich sein können.

Die Schwingungskontrolle und Entkopplung wird dabei durch den Verbindungsabschnitt, insbesondere den mindestens einen Faltenbalg des Verbindungsabschnitts, bereitgestellt, wobei der Verbindungsabschnitt aus einem Elastomer geformt ist. Der Verbindungsabschnitt ist fest mit den zwei Anschlusselementen verbunden und erstreckt sich im Wesentlichen zwischen den zwei Anschlusselementen, wobei nicht alle Teile des Verbindungsabschnitts zwingend zwischen den zwei Anschlusselementen angeordnet sein müssen. Der Begriff Elastomer umfasst formfeste, aber elastisch verformbare Kunststoffe; bei Zug- oder Druckbelastung verformen sich diese Kunststoffe, kehren aber anschliessend wieder in ihre ursprüngliche, unverformte Gestalt zurück. Der Verbindungsabschnitt kann zusätzlich eine Karkasse als tragendes Gerüst aufweisen, wobei die Karkasse aus Gewebe- oder Gelegeschichten bestehen kann, die im Elastomer eingebettet sind, bzw. auch noch weitere funktionale Schichten umfassen.

Der Verbindungsabschnitt ist so ausgebildet, dass er einen inneren Bereich zumindest teilweise umgibt, wobei durch den inneren Bereich ein Fluid strömen kann. Damit ein Fluid durch den inneren Bereich strömen kann, umfasst der Verbindungsabschnitt zwei Öffnungen, durch die ein Fluid in den inneren Bereich eindringen und diesen anschliessend wieder verlassen kann, d.h. im Bereich der zwei Öffnungen ist der innere Bereich nicht vom Verbindungsabschnitt umgeben. Vorzugsweise sind die zwei Öffnungen in der Nähe der zwei Anschlusselemente positioniert. Im Falle von als kreisringförmige Flansche ausgebildeten Anschlusselementen können die zwei Öffnungen im Verbindungsabschnitt beispielsweise in der Nähe der zwei Löcher in den kreisringförmigen Flanschen angeordnet sein. Die durch den inneren Bereich zwischen den zwei Öffnungen zentral verlaufende Ausdehnungslinie, die grundsätzlich virtuell ist, kann dabei zur geometrischen Beschreibung des Verbindungsabschnitts eingesetzt werden.

Der Verbindungsabschnitt kann geometrisch, insbesondere ausserhalb des mindestens einen Faltenbalges, im Wesentlichen einem gebogenen oder geraden Hohlzylinder, insbesondere einem Kreisringzylinder, entsprechen, so dass der innere Bereich im Wesentlichen einem Zylinder entspricht. Im Falle eines geraden Hohlzylinders ist die Achse des Hohlzylinders ebenfalls gerade, und im Falle eines gebogenen Hohlzylinders ist die Achse des Hohlzylinders ebenfalls gebogen. Im Falle eines geraden oder gebogenen Hohlzylinders kann die Ausdehnungslinie daher mit der geraden oder gebogenen Achse identifiziert werden.

Im Bereich des mindestens einen Faltenbalges variiert der Durchmesser des inneren Bereichs jeweils auf periodische Art und Weise, wobei ein Faltenbalg mindestens eine Periode umfasst. Im Falle eines Faltenbalges mit einer Periode kann der Durchmesser des inneren Bereichs daher, der Ausdehnungslinie folgend, zuerst von einem Minimum zu einem Maximum ansteigen und anschliessend vom Maximum zum Minimum abfallen. Im Falle eines Faltenbalges mit zwei Perioden kann der Durchmesser des inneren Bereichs, der Ausdehnungslinie folgend, zuerst von einem Minimum zu einem Maximum ansteigen, dann vom Maximum zum Minimum abfallen, danach wieder vom Minimum zum Maximum ansteigen und schliesslich vom Maximum zum Minimum abfallen. Faltenbälge mit mehr als zwei Perioden sind auch möglich.

Zur mechanischen Verstärkung des Verbindungsabschnitts kann dieser einen oder mehrere Stabilisierungsringe aufweisen. Falls der Verbindungsabschnitt daher als gerader oder gebogener Hohlzylinder ausgebildet ist, kann jeder Stabilisierungsring in einer entsprechenden Ebene liegen, die senkrecht auf der Ausdehnungslinie steht.

Auf der Aussenseite des Verbindungsabschnitts weist der erfindungsgemässe Kompensator mindestens eine aus dem Elastomer geformte lokale Erhöhung auf, wobei jede lokale Erhöhung der mindestens einen lokalen Erhöhung eine von der Aussenseite beabstandete Oberfläche aufweist. Die beabstandete Oberfläche, genauer eine auf der beabstandeten Oberfläche stehende Normale, jeder lokalen Erhöhung ist vom restlichen Verbindungsabschnitt weggerichtet und zeigt in Richtung des äusseren Bereichs ausserhalb des Verbindungsabschnitts. Die mindestens eine lokale Erhöhung ist insbesondere so positioniert, dass sie gut zugänglich ist. Vom inneren Bereich zum äusseren Bereich gedanklich schreitend, ist im Bereich der mindestens einen lokalen Erhöhung eine grössere Menge des Elastomers zu durchqueren als zumindest in den umgebenden Bereichen des Verbindungsabschnitts, die die mindestens eine lokale Erhöhung umgeben. Falls der erfindungsgemässe Kompensator mehr als eine solche lokale Erhöhung aufweist, sind die entsprechenden lokalen Erhöhungen voneinander getrennt.

Die mindestens eine lokale Erhöhung stellt daher auf vorteilhafte Art und Weise Messpunkte bereit, an denen Härtemessungen, insbesondere mit einem Shore-Durometer, durchgeführt werden können. Messungen mit Shore-Durometern können das zu messende Material beschädigen; im Falle des erfindungsgemässen Kompensators ist eine solche Beschädigung jedoch, falls Härtemessungen an der mindestens einen lokalen Erhöhung durchgeführt werden, primär auf die mindestens eine lokale Erhöhung beschränkt, so dass die Integrität des Verbindungsabschnitts und die Funktion des mindestens einen Faltenbalges als Vibrationsdämpfer auch nach einer eventuellen Materialschädigung im Bereich der mindestens einen lokalen Erhöhung im Rahmen einer Härtemessung erhalten bleiben sollte.

Die Form und Grösse der mindestens einen lokalen Erhöhung kann so ausgelegt werden, dass die mindestens eine lokale Erhöhung für bestimmte Härtemessverfahren besonders geeignet ist. Ein Durometer zur Härtemessung misst die Tiefe einer Vertiefung im vermessenen Material, die durch eine gegebene Kraft auf einen standardisierten Eindringkörper erzeugt wird. Die Tiefe einer Vertiefung im vermessenen Material hängt dabei von der Härte des Materials, seinen viskoelastischen Eigenschaften, der Form des Eindringkörpers und der Dauer des Tests ab. Im Standard ASTM D2240-15(2021) werden dabei unterschiedliche Arten von Durometern definiert, wobei Durometer vom Typ A und Durometer vom Typ D die geläufigsten Arten von Durometern darstellen. Da Eindringkörper unterschiedlicher Form unterschiedlich tief in das zu vermessende Material eindringen können, kann insbesondere eine Höhe der mindestens einen lokalen Erhöhung relativ zu dem die mindestens eine lokale Erhöhung umgebenden Bereich der Aussenseite an den Typ von Durometer angepasst werden, der zur späteren Härtemessung vorgesehen ist.

Da die mindestens eine lokale Erhöhung nur für eine Härtemessung ausgebildet ist und ansonsten keine weiteren Funktionen ausüben muss, kann die von der Aussenseite beabstandete Oberfläche vorteilhafterweise so beschaffen sein, dass ein Durometer optimal auf der Oberfläche positioniert werden kann. Hierzu kann es insbesondere vorteilhaft sein, wenn die von der Aussenseite beabstandete Oberfläche der mindestens einen lokalen Erhöhung eben ausgebildet ist. Somit kann eine präzise Härtebestimmung auch für Kompensatoren durchgeführt werden, bei denen die Aussenseite ansonsten fast durchgehend gekrümmt ist und bei denen deswegen handelsübliche Durometer nur schwierig einzusetzen wären - dies ist beispielsweise bei Kompensatoren der Fall, deren Verbindungsabschnitte im Wesentlichen hohlzylinderförmig ausgebildet sind.

Da die mindestens eine lokale Erhöhung eine präzise und fixe Position relativ zum restlichen Verbindungsabschnitt aufweist, kann mit dem erfindungsgemässen Kompensator vorteilhafterweise auch erreicht werden, dass zu unterschiedlichen Zeitpunkten gemachte Härtemessungen vergleichbar bleiben, da die Härtemessungen immer an denselben Stellen durchgeführt werden. Somit kann vorteilhafterweise erreicht werden, dass Trends in der Materialveränderung, beispielsweise bedingt durch einen Alterungsprozess, frühzeitiger und mit grösserer Sicherheit erkannt werden.

Um eine hinreichend zuverlässige Härtemessung zu ermöglichen, sind vorteilhafterweise mehrere lokale Erhöhungen vorhanden, insbesondere fünf oder mehr als fünf lokale Erhöhungen. Vorteilhafterweise sind die mehreren lokalen Erhöhungen auch gleichmässig auf der Aussenseite des Verbindungsabschnitts verteilt, so dass räumliche Unterschiede im Alterungsprozess des Verbindungsabschnitts detektiert werden können. Um eine vereinfachte Härtemessung zu ermöglichen, können die mehreren lokalen Erhöhungen vorteilhafterweise so angeordnet werden, dass sie relativ zum restlichen Verbindungsabschnitt auf derselben Seite des Verbindungsabschnitts angeordnet sind.

Um eine einfachere Herstellung des erfindungsgemässen Kompensators zu ermöglichen, kann die mindestens eine lokale Erhöhung integral mit dem übrigen Verbindungsabschnitt verbunden sein, d.h. vorzugsweise existiert zwischen der mindestens einen lokalen Erhöhung und dem restlichen Verbindungsabschnitt keine Phasengrenze. Vorteilhafterweise kann somit auch erreicht werden, dass die mindestens eine lokale Erhöhung ähnliche Alterungsprozesse erfährt wie der restliche Verbindungsabschnitt.

Ein Verbindungsabschnitt eines erfindungsgemässen Kompensators kann beispielsweise wie folgt hergestellt werden: ein Synthesekautschuk oder ein Naturkautschuk wird um einem aufblasbaren Dorn aufgebaut bzw. gewickelt, insbesondere mit einer Karkasse. In einer Werkzeug mit einer Kavität wird der Dorn dann aufgeblasen, der Kautschuk erhitzt und gegen die die Kavität begrenzenden Flächen gepresst, wodurch der Kautschuk nach einem Abkühlen die Form der Kavität, in der auch die Form der mindestens einen lokalen Erhöhung nachgebildet sein kann, angenommen hat. Gleichzeitig oder anschliessend kann der Kautschuk auch vulkanisiert werden. Die mindestens eine lokale Erhöhung kann folglich gleichzeitig mit der Vulkanisierung oder vor der Vulkanisierung hergestellt werden.

Ein Verbindungsabschnitt eines erfindungsgemässen Kompensators kann beispielsweise auch durch ein Spritzgussverfahren hergestellt werden, wobei die mindestens eine lokale Erhöhung in einer Kavität eines im Spritzgussverfahren verwendeten Werkzeugs nachgebildet werden kann. Teile des Verbindungsabschnitts eines erfindungsgemässen Kompensators können auch separat mittels Spritzguss gefertigt werden und anschliessend miteinander verbunden werden.

Der Verbindungsabschnitt eines erfindungsgemässen Kompensators kann grundsätzlich aber auch anders hergestellt werden.

In einer Ausführungsform des Kompensators gemäss dem ersten Aspekt der Erfindung ist die mindestens eine lokale Erhöhung für eine Härtemessung mit einem Shore-Durometer, insbesondere einem Shore-Durometer vom Typ A gemäss Standard ASTM D2240-15(2021), ausgebildet.

Shore-Durometer vom Typ A können vorteilhafterweise bei der Härtemessung weicher Materialien wie Elastomeren verwendet werden.

In einer weiteren Ausführungsform des Kompensators gemäss dem ersten Aspekt der Erfindung weist jede lokale Erhöhung der mindestens einen lokalen Erhöhung relativ zu dem die jeweilige lokale Erhöhung umgebenden Bereich der Aussenseite, jeweils in einer Richtung entlang einer auf dem jeweiligen umgebenden Bereich der Aussenseite stehenden Normalen gemessen, eine Höhe von mindestens 0.2 mm, insbesondere mehr als 1.0 mm, vorzugsweise mehr als 2.0 mm gegenüber dem jeweiligen umgebenden Bereich der Aussenseite auf.

In einer weiteren Ausführungsform des Kompensators gemäss dem ersten Aspekt der Erfindung ist die beabstandete Oberfläche jeder lokalen Erhöhung der mindestens einen lokalen Erhöhung eben.

In einer weiteren Ausführungsform des Kompensators gemäss dem ersten Aspekt der Erfindung weist die von der Aussenseite beabstandete Oberfläche jeder lokalen Erhöhung der mindestens einen lokalen Erhöhung jeweils eine ovalförmige, insbesondere elliptische und insbesondere kreisförmige, Umrandung auf, und/oder weist die von der Aussenseite beabstandete Oberfläche jeder lokalen Erhöhung der mindesten einen lokalen Erhöhung jeweils eine polygonale, insbesondere viereckige, Umrandung auf.

Ovalförmige oder polygonale Umrandungen ermöglichen vorteilhafterweise ein leichteres Identifizieren der Stellen, an denen eine Härtemessung durchgeführt werden soll, so dass die Wahrscheinlichkeit von Messfehlern durch Wahl falscher Messstellen verringert werden kann.

In einer weiteren Ausführungsform des Kompensators gemäss dem ersten Aspekt der Erfindung ist jede lokale Erhöhung der mindestens einen lokalen Erhöhung zumindest teilweise optisch, insbesondere farblich, gegenüber der Aussenseite hervorgehoben.

Eine optische Kennzeichnung der mindestens einen lokalen Erhöhung vereinfacht die korrekte Identifizierung der Stellen, an denen eine Härtemessung durchgeführt werden soll, so dass die Wahrscheinlichkeit von Messfehlern durch Wahl falscher Messstellen verringert werden kann.

In einer weiteren Ausführungsform des Kompensators gemäss dem ersten Aspekt der Erfindung sind auf der Aussenseite mindestens zwei, insbesondere mindestens fünf, aus dem Elastomer geformte lokale Erhöhungen angeordnet, wobei die mindestens zwei, insbesondere mindestens fünf, lokalen Erhöhungen jeweils voneinander beabstandet sind.

In einer weiteren Ausführungsform des Kompensators gemäss dem ersten Aspekt der Erfindung sind die lokalen Erhöhungen entlang einer auf der Aussenseite verlaufenden Verteilungslinie im Wesentlichen gleichmässig verteilt auf der Aussenseite angeordnet.

Die Verteilungslinie kann eine virtuelle Linie oder eine physisch nachweisbare Linie sein. Falls der Verbindungsabschnitt beispielsweise aus zwei separat mittels Spritzguss hergestellten Hälften gebildet sein sollte, kann die Verteilungslinie einer Verbindungsstelle zwischen den zwei Hälften folgen. Die Verteilungslinie kann aber auch nur virtuell vorhanden sein.

In einer weiteren Ausführungsform des Kompensators gemäss dem ersten Aspekt der Erfindung weist der Verbindungsabschnitt zwei Faltenbälge und einen Rohrabschnitt zwischen den zwei Faltenbälgen auf, wobei ein Rohrabschnittsteil der Ausdehnungslinie durch den vom Rohrabschnitt umgebenen Teil des inneren Bereichs verläuft, und wobei die Verteilungslinie zwischen den zwei Faltenbälgen auf dem Rohrabschnitt und insbesondere parallel zum Rohrabschnittsteil der Ausdehnungslinie verläuft.

Der Rohrabschnitt kann als gebogener oder gerader Hohlzylinder ausgebildet sein und der Rohrabschnittsteil der Ausdehnungslinie kann der gebogenen oder geraden Achse des gebogenen oder geraden Hohlzylinders entsprechen. Die mindestens eine lokale Erhöhung kann daher auf der Aussenseite des Rohrabschnitts angeordnet sein. Falls Stabilisierungsringe auf dem Rohrabschnitt angebracht sein sollten, kann eine lokale Erhöhung zwischen jedem benachbarten Paar von Stabilisierungsringen angeordnet sein.

In einer weiteren Ausführungsform des Kompensators gemäss dem ersten Aspekt der Erfindung ist der Rohrabschnitt gerade und entspricht geometrisch im Wesentlichen einem Hohlzylinder, oder ist der Rohrabschnitt zumindest teilweise gebogen und entspricht geometrisch im Wesentlichen einem zumindest teilweise gebogenen Hohlzylinder.

In einer weiteren Ausführungsform des Kompensators gemäss dem ersten Aspekt der Erfindung verläuft die Verteilungslinie im Wesentlichen in einer Ebene, die senkrecht zu einem durch die Ebene verlaufenden Schnittteil der Ausdehnungslinie ausgerichtet ist. Die Verteilungslinie ist geschlossen.

In einem hinreichend kleinen Bereich um den Schnittpunkt der Ebene mit der Ausdehnungslinie kann die Ausdehnungslinie als gerade angesehen werden, wobei der entsprechende gerade Teil der Ausdehnungslinie als Schnittteil bezeichnet werden kann. Die Ebene ist senkrecht zu diesem Schnittteil ausgerichtet.

In einer weiteren Ausführungsform des Kompensators gemäss dem ersten Aspekt der Erfindung weist der Kompensator genau einen Faltenbalg auf, wobei der genau eine Faltenbalg so ausgebildet ist, dass der Durchmesser des vom genau einen Faltenbalg umgebenen Teils des inneren Bereichs genau einmal a) zuerst vom Minimum zum Maximum ansteigt und dann b) vom Maximum zum Minimum abfällt, und wobei die Ebene, in der die Verteilungslinie verläuft, im Maximum des Durchmessers angeordnet ist.

In einer weiteren Ausführungsform des Kompensators gemäss dem ersten Aspekt der Erfindung ist der Verbindungsabschnitt aus einem, insbesondere vulkanisierten, Synthesekautschuk, insbesondere einem Ethylen-Propylen-Dien-Kautschuk oder einem Styrol-Butadien-Kautschuk oder einem Butadien-Acrylnitril-Kautschuk, oder einem, insbesondere vulkanisierten, Naturkautschuk gefertigt. Andere aus dem Stand der Technik für Kompensatoren bekannte Elastomere können grundsätzlich aber auch verwendet werden.

Gemäss einem zweiten Aspekt der Erfindung betrifft die Erfindung ein Verfahren zum Bestimmen einer Shore-Härte des Verbindungsabschnitts eines Kompensators gemäss dem ersten Aspekt der Erfindung, wobei das Verfahren die folgenden Schritte aufweist: 1) Bereitstellen eines Shore-Durometers, insbesondere eines Shore-Durometers vom Typ A gemäss Standard ASTM D2240-15(2021), wobei der bereitgestellte Shore-Durometer insbesondere bereits kalibriert ist; 2) Messen einer lokalen Shore-Härte jeder lokalen Erhöhung der mindestens einen lokalen Erhöhung mit dem Shore-Durometer, umfassend die folgenden Teilschritte für jede lokale Erhöhung: a) Positionieren des Shore-Durometers senkrecht zur beabstandeten Oberfläche der jeweiligen lokalen Erhöhung; b) Gleichmässiges Drücken des senkrecht positionierten Shore-Durometers gegen die beabstandete Oberfläche der jeweiligen lokalen Erhöhung solange, bis die vom Shore-Durometer bereitgestellte lokale Shore-Härte im Wesentlichen konstant ist; c) Ablesen des vom Shore-Durometer bereitgestellten im Wesentlichen konstanten Werts der lokalen Shore-Härte der jeweiligen lokalen Erhöhung; und 3) Bestimmen, insbesondere durch eine Mittelwertbildung, der Shore-Härte des Verbindungsabschnitts basierend auf der gemessenen mindestens einen lokalen Shore-Härte, und optional Erfassen der während des Messens in Verfahrensschritt 2) vorliegenden Temperatur im äusseren Bereich ausserhalb des Verbindungsabschnitts.

Um die Messgenauigkeit weiter zu verbessern, kann vor Teilschritt 2a die beabstandete Oberfläche der mindestens einen lokalen Erhöhung auch gereinigt werden. Die Härtemessung kann direkt am verbauten Kompensator erfolgen; alternativ kann der Kompensator auch nach einem Ausbau auf einer für die Härtemessung geeigneten Unterlage/Halterung positioniert werden, wodurch die Messgenauigkeit gesteigert werden dürfte. Falls die in Schritt 3 bestimmte Shore-Härte einen bestimmten Schwellwert überschreiten sollte, kann geschlussfolgert werden, dass der Kompensator zu ersetzen ist. Für Durometer vom Typ A kann beispielsweise bei Überschreiten eines Shore-Werts von 80 A ein Austausch des Kompensators erwogen werden.

Gemäss einem dritten Aspekt der Erfindung betrifft die Erfindung ein Kompensatorsystem, aufweisend 1) einen Kompensator gemäss dem ersten Aspekt der Erfindung, 2) ein Instruktionsblatt, aufweisend Instruktionen zum Verfahren gemäss dem zweiten Aspekt der Erfindung, und optional 3) einen Shore-Durometer, insbesondere einen Shore-Durometer vom Typ A gemäss Standard ASTM D2240-15(2021).

Das Instruktionsblatt kann einem Installateur die notwendigen Anweisungen übermitteln, um ein Verfahren gemäss dem zweiten Aspekt der Erfindung auszuführen. Vorteilhafterweise kann somit eine präzise Bestimmung einer Shore-Härte des Verbindungsabschnitts auch bei weniger geschultem Personal oder bei im Laufe der Zeit wechselndem Personal ermöglicht werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
Fig. 1 zeigt ein erstes Ausführungsbeispiel eines Kompensators in drei unterschiedlichen Ansichten; und
Fig. 2 zeigt ein zweites Ausführungsbeispiel eines Kompensators in drei unterschiedlichen Ansichten.

Grundsätzlich sind in den Figuren gleiche Teile mit gleichen Bezugszeichen versehen.

### Wege zur Ausführung der Erfindung

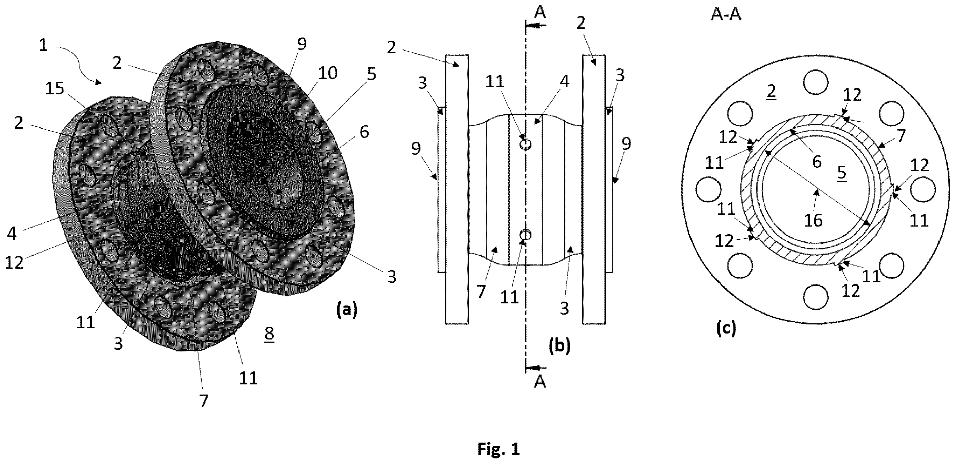

**Fig. 1** zeigt ein erstes Ausführungsbeispiel eines Kompensators 1 in drei unterschiedlichen Ansichten. In Fig. 1a ist eine perspektivische Ansicht eines Kompensators 2 mit einem Faltenbalg 4 zwischen zwei als Flansche ausgebildeten Anschlusselementen 2 gezeigt. Der Faltenbalg 4 ist Teil eines Verbindungsabschnitts 3, der die zwei Anschlusselemente 2 miteinander verbindet. Der Verbindungsabschnitt 3 ist fest mit den zwei Anschlusselementen 2 verbunden. Wie in Fig. 1 sichtbar, befindet sich der Verbindungsabschnitt 3 im Wesentlichen zwischen den zwei Anschlusselementen 2 und nur ein kleiner Teil ist ausserhalb. Über die zwei Anschlusselemente 2 kann der Kompensator 1 mit zwei Rohrleitungen verbunden werden. Der Verbindungsabschnitt 3 weist einen inneren Bereich 5 auf, durch den ein Fluid strömen kann, wobei das Fluid durch zwei Öffnungen 9 in den inneren Bereich ein- und austreten kann. In Fig. 1a ist dabei nur eine Öffnung 9 sichtbar; in der Seitenansicht nach Fig. 1b ist die Position der zwei Öffnungen 9 sichtbar. Der Verbindungsabschnitt 3 weist eine Innenseite 6 und eine Aussenseite 7 auf, wobei die Innenseite 6 dem inneren Bereich 5 zugewandt ist und die Aussenseite 7 einem äusseren Bereich 8 ausserhalb des Kompensators 1 zugewandt ist. Der Verbindungsabschnitt 3 ist aus einem Elastomer geformt, insbesondere einem vulkanisierten Synthesekautschuk oder einem vulkanisierten Naturkautschuk. Der Verbindungsabschnitt 3 kann zusätzlich eine Karkasse als tragendes Gerüst aufweisen, wobei die Karkasse aus Gewebe- oder Gelegeschichten bestehen kann, die im Elastomer eingebettet sind.

Eine Ausdehnungslinie 10 verläuft zentral durch den inneren Bereich 5 zwischen den zwei Öffnungen 9. Die Ausdehnungslinie 10 ist eine virtuelle Linie. Der Faltenbalg 4 ist so aufgebaut, dass ein Durchmesser 16 des vom Faltenbalg 4 umgebenen Teils des inneren Bereichs 5, der Ausdehnungslinie 10 von einer Öffnung 9 zur anderen Öffnung 9 folgend, zuerst von einem Minimum zu einem Maximum ansteigt um dann wieder zum Minimum abzufallen. Dies ist auch in der Seitenansicht nach Fig. 1b sichtbar. Über den Faltenbalg 4 kann der Kompensator 1 eine Schwingungskontrolle ausführen.

Auf der Aussenseite 7 des Verbindungsabschnitts 3 sind im Ausführungsbeispiel von Fig. 1 insgesamt fünf lokale Erhöhungen 11 angeordnet, wobei in der perspektivischen Darstellung von Fig. 1a und in der Seitenansicht von Fig. 1b nur zwei lokale Erhöhungen 11 sichtbar sind. In der Schnittansicht nach Fig. 1c, die entlang der in Fig. 1b gezeigten Fläche A-A erfolgt, sind die fünf lokalen Erhöhungen 11 alle sichtbar; weiter ist in der Schnittansicht nach Fig. 1c auch der Durchmesser 16 des inneren Bereichs 5 in der Fläche A-A gezeigt. Die fünf lokalen Erhöhungen 11 sind auf der Aussenseite 7 im Bereich des Faltenbalgs 4, genauer im Bereich des Faltenbalgs 4, in dem der Faltenbalg 4 den inneren Bereich 5 mit maximalem Durchmesser 16 umgibt, angeordnet. Die fünf lokalen Erhöhungen 11 sind dabei entlang einer auf der Aussenseite 7 verlaufenden Verteilungslinie 15 angeordnet, wobei die Verteilungslinie 15 eine virtuelle Linie ist. Wie in Fig. 1c sichtbar wird, sind die fünf lokalen Erhöhungen 11 gleichmässig entlang der Verteilungslinie 15 verteilt. Die Verteilungslinie 15 ist eine geschlossene Linie und liegt im ersten Ausführungsbeispiel in einer Ebene, die senkrecht zur Ausdehnungslinie 10 ausgerichtet ist.

Die fünf lokalen Erhöhungen 11 weisen jeweils eine von der Aussenseite 7 beabstandete Oberfläche 12 auf, wobei für jede der fünf lokalen Erhöhungen 11 eine auf der jeweiligen Oberfläche 12 stehende Normale im Wesentlichen parallel zu einer Normale auf der die jeweilige lokale Erhöhung 11 umgebenden Aussenseite 7 ausgerichtet ist. Die beabstandete Oberfläche 12 ist gegenüber der die jeweilige lokale Erhöhung 11 umgebenden Aussenseite 7 in Richtung des äusseren Bereichs 8 versetzt. Im Ausführungsbeispiel von Fig. 1 sind die lokalen Erhöhungen 11 kreiszylindrisch ausgebildet, d.h. die Umrandung jeder beabstandeten Oberfläche 12 entspricht einem Kreis und die Mantelfläche jeder lokalen Erhöhung 11 steht im Wesentlichen senkrecht auf der die jeweilige lokale Erhöhung 11 umgebenden Aussenseite 7. Die kreiszylindrisch ausgebildeten Erhöhungen 11 im ersten Ausführungsbeispiel weisen eine geringe Höhe auf. Die Oberflächen 12 sind im Wesentlichen eben.

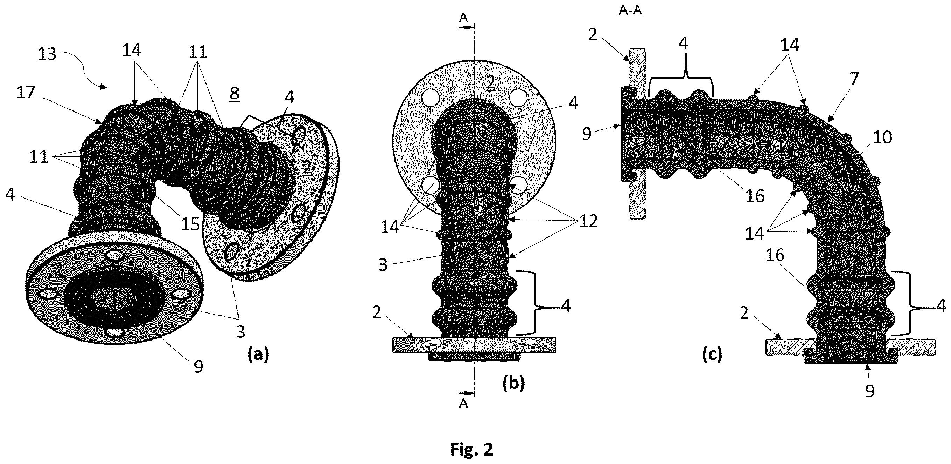

**Fig. 2** zeigt ein zweites Ausführungsbeispiel eines Kompensators 13 in drei unterschiedlichen Ansichten. Der Kompensator 13 weist zwei als Flansche ausgebildete Anschlusselemente 2 und einen Verbindungsabschnitt 3 auf, wobei der Verbindungsabschnitt 3 zwei Faltenbälge 4 und einen zwischen den zwei Faltenbälgen 4 liegenden Rohrabschnitt 17 aufweist. Jeder der zwei Faltenbälge 4 ist in der Nähe eines entsprechenden Anschlusselements 2 angeordnet und weist folgende Struktur auf: von einer Öffnung 9 des Verbindungsabschnitts 3 entlang der durch den inneren Bereich 5 zentral verlaufenden Ausdehnungslinie 10 schreitend (siehe hierzu insbesondere die Schnittansicht in Fig. 2c, wobei die Schnittebene in Fig. 2b gezeigt ist), steigt der Durchmesser 16 des inneren Bereichs erst von einem Minimum zu einem Maximum an, fällt dann wieder zum Minimum ab, steigt anschliessend wieder zum Maximum an um dann schliesslich zum Minimum abzufallen. Jeder Faltenbalg 4 kann somit als zwei Perioden aufweisend angesehen werden. Ein Fluid kann durch den vom Verbindungsabschnitt zumindest teilweise umgebenen inneren Bereich 5 von einer Öffnung 9 zur anderen Öffnung 9 strömen. Der Verbindungsabschnitt 3 ist aus einem Elastomer geformt; zusätzlich kann der Verbindungsabschnitt 3 aber auch eine Karkasse als tragendes Gerüst aufweisen.

Der Rohrabschnitt 17 zwischen den zwei Faltenbälgen 4 entspricht im Wesentlichen einem gebogenen Hohlzylinder, wobei der Hohlzylinder so gebogen ist, dass die zwei Enden der im Rohrabschnitt 17 verlaufenden Ausdehnungslinie 10, d.h. die zwei Enden des Rohrabschnittsteils der Ausdehnungslinie 10, im Wesentlichen senkrecht zueinander ausgerichtet sind. Zur Stabilisierung weist der Verbindungsabschnitt 3 im Bereich des Rohrabschnitts 17 weiter Stabilisierungsringe 14 auf, wobei im zweiten Ausführungsbeispiel fünf Stabilisierungsringe 14 vorhanden sind. Die Stabilisierungsringe 14 bilden jeweils geschlossene Ringe, die jeweils in einer Ebene angeordnet ist, die zu der durch sie verlaufenden Ausdehnungslinie 10 im Wesentlichen senkrecht ausgerichtet ist.

Zwischen jedem Faltenbalg 4 der zwei Faltenbälge 4 um dem jeweils nächsten Stabilisierungsring 14 ist eine kreiszylindrische lokale Erhöhung 11 angeordnet. Weiter ist zwischen jedem benachbarten Paar von Stabilisierungsringen 14 eine kreiszylindrische lokale Erhöhung 11 angeordnet. Folglich sind auf der Aussenseite 7 des Verbindungsabschnitts 3 des zweiten Ausführungsbeispiels insgesamt sechs lokale Erhöhungen 11 vorhanden, die entlang einer Verteilungslinie 15 angeordnet sind, welche parallel zur Ausdehnungslinie 10 auf dem Rohrabschnitt 17 verläuft. Die Verteilungslinie 15 und die Ausdehnungslinie 10 sind beides virtuelle Linien. Alle sechs lokalen Erhöhungen 11 befinden sich damit auf einer Seite des Rohrabschnitts 17. Die jeweiligen Oberflächen 12 der lokalen Erhöhungen 11 sind, wie in Fig. 2b sichtbar, von der die jeweilige lokale Erhöhung 11 umgebenden Aussenseite 7 beabstandet. Die Oberflächen 12 sind im Wesentlichen eben.

## Patentansprüche

1. Kompensator (1, 13) zum Anschluss an mindestens eine Rohrleitung, wobei der Kompensator 1) zwei endseitig angeordnete Anschlusselemente (2) und 2) einen aus einem Elastomer geformten Verbindungsabschnitt (3) zwischen den zwei Anschlusselementen (2) aufweist, wobei der Verbindungsabschnitt (3) mindestens einen Faltenbalg (4) aufweist, wobei der Verbindungsabschnitt (3) einen inneren Bereich (5) zumindest teilweise umgibt und eine Innenseite (6) und eine Aussenseite (7) aufweist, wobei die Innenseite (6) dem inneren Bereich (5) zugewandt ist und die Aussenseite (7) einem äusseren Bereich (8) ausserhalb des Kompensators (1, 13) zugewandt ist, wobei der Verbindungsabschnitt (3) zwei Öffnungen (9) aufweist, wobei durch die zwei Öffnungen (9) der innere Bereich (5) mit dem äusseren Bereich (8) verbunden ist, wobei eine Ausdehnungslinie (10) zentral durch den inneren Bereich (5) zwischen den Öffnungen (9) verläuft, und wobei jeder Faltenbalg des mindestens einen Faltenbalges (4) so ausgebildet ist, dass, der Ausdehnungslinie (10) folgend, ein Durchmesser (16) des vom jeweiligen Faltenbalg (4) umgebenen Teils des inneren Bereichs (5) zumindest einmal a) zuerst von einem Minimum zu einem Maximum ansteigt und dann b) von dem Maximum zum Minimum abfällt,
**dadurch gekennzeichnet, dass**
der Kompensator (1, 13) auf der Aussenseite (7) mindestens eine aus dem Elastomer geformte lokale Erhöhung (11) aufweist, wobei jede lokale Erhöhung der mindestens einen lokalen Erhöhung (11) eine von der Aussenseite (7) beabstandete Oberfläche (12) aufweist, und wobei die mindestens eine lokale Erhöhung (11) für eine Härtemessung des Verbindungsabschnitts (3) des Kompensators (1, 13) ausgebildet ist.

2. Kompensator (1, 13) gemäss einem der vorherigen Ansprüche, wobei die mindestens eine lokale Erhöhung (11) für eine Härtemessung mit einem Shore-Durometer, insbesondere einem Shore-Durometer vom Typ A gemäss Standard ASTM D2240-15(2021), ausgebildet ist.

3. Kompensator (1, 13) gemäss Anspruch 1 oder 2, wobei jede lokale Erhöhung der mindestens einen lokalen Erhöhung (11) relativ zu dem die jeweilige lokale Erhöhung umgebenden Bereich der Aussenseite (7), jeweils in einer Richtung entlang einer auf dem jeweiligen umgebenden Bereich der Aussenseite (7) stehenden Normalen gemessen, eine Höhe von mindestens 0.2 mm, insbesondere mehr als 1.0 mm, vorzugsweise mehr als 2.0 mm gegenüber dem jeweiligen umgebenden Bereich der Aussenseite (7) aufweist.

4. Kompensator (1, 13) gemäss einem der vorherigen Ansprüche, wobei die beabstandete Oberfläche (12) jeder lokalen Erhöhung der mindestens einen lokalen Erhöhung (11) eben ist.

5. Kompensator (1, 13) gemäss Anspruch 4, wobei die von der Aussenseite (7) beabstandete Oberfläche (12) jeder lokalen Erhöhung der mindestens einen lokalen Erhöhung (11) jeweils eine ovalförmige, insbesondere elliptische und insbesondere kreisförmige, Umrandung aufweist, und/oder wobei die von der Aussenseite (7) beabstandete Oberfläche (12) jeder lokalen Erhöhung der mindesten einen lokalen Erhöhung (11) jeweils eine polygonale, insbesondere viereckige, Umrandung aufweist.

6. Kompensator (1, 13) gemäss einem der vorherigen Ansprüche, wobei jede lokale Erhöhung der mindestens einen lokalen Erhöhung (11) zumindest teilweise optisch, insbesondere farblich, gegenüber der Aussenseite (7) hervorgehoben ist.

7. Kompensator (1, 13) gemäss einem der vorherigen Ansprüche, wobei auf der Aussenseite (7) mindestens zwei, insbesondere mindestens fünf, aus dem Elastomer geformte lokale Erhöhungen (11) angeordnet sind, wobei die mindestens zwei, insbesondere mindestens fünf, lokalen Erhöhungen (11) jeweils voneinander beabstandet sind.

8. Kompensator (1, 13) gemäss Anspruch 7, wobei die lokalen Erhöhungen (11) entlang einer auf der Aussenseite (7) verlaufenden Verteilungslinie (15) im Wesentlichen gleichmässig verteilt auf der Aussenseite (7) angeordnet sind.

9. Kompensator (13) gemäss Anspruch 8, wobei der Verbindungsabschnitt (3) zwei Faltenbälge (4) und einen Rohrabschnitt (17) zwischen den zwei Faltenbälgen (4) aufweist, wobei ein Rohrabschnittsteil der Ausdehnungslinie (10) durch den vom Rohrabschnitt (17) umgebenen Teil des inneren Bereichs (5) verläuft, und wobei die Verteilungslinie (15) zwischen den zwei Faltenbälgen (4) auf dem Rohrabschnitt (17) und insbesondere parallel zum Rohrabschnittsteil der Ausdehnungslinie (10) verläuft.

10. Kompensator (13) gemäss Anspruch 9, wobei der Rohrabschnitt (17) gerade ist und geometrisch im Wesentlichen einem Hohlzylinder entspricht, oder wobei der Rohrabschnitt (17) zumindest teilweise gebogen ist und geometrisch im Wesentlichen einem zumindest teilweise gebogenen Hohlzylinder entspricht.

11. Kompensator (1) gemäss Anspruch 8, wobei die Verteilungslinie (15) im Wesentlichen in einer Ebene verläuft, die senkrecht zu einem durch die Ebene verlaufenden Schnittteil der Ausdehnungslinie (10) ausgerichtet ist, und wobei die Verteilungslinie (15) geschlossen ist.

12. Kompensator (1) gemäss Anspruch 11, wobei der Kompensator (1) genau einen Faltenbalg (4) aufweist, wobei der genau eine Faltenbalg (4) so ausgebildet ist, dass der Durchmesser (16) des vom genau einen Faltenbalg (4) umgebenen Teils des inneren Bereichs (5) genau einmal a) zuerst vom Minimum zum Maximum ansteigt und dann b) vom Maximum zum Minimum abfällt, und wobei die Ebene, in der die Verteilungslinie (15) verläuft, im Maximum des Durchmessers (16) angeordnet ist.

13. Kompensator (1, 13) gemäss einem der vorherigen Ansprüche, wobei der Verbindungsabschnitt (3) aus einem, insbesondere vulkanisierten, Synthesekautschuk, insbesondere einem Ethylen-Propylen-Dien-Kautschuk oder einem Styrol-Butadien-Kautschuk oder einem Butadien-Acrylnitril-Kautschuk, oder einem, insbesondere vulkanisierten, Naturkautschuk gefertigt ist.

14. Verfahren zum Bestimmen einer Shore-Härte des Verbindungsabschnitts (3) eines Kompensators (1, 13) gemäss einem der vorherigen Ansprüche, wobei das Verfahren die folgenden Schritte aufweist:
1) Bereitstellen eines Shore-Durometers, insbesondere eines Shore-Durometers vom Typ A gemäss Standard ASTM D2240-15(2021), wobei der bereitgestellte Shore-Durometer insbesondere bereits kalibriert ist;
2) Messen einer lokalen Shore-Härte jeder lokalen Erhöhung der mindestens einen lokalen Erhöhung (11) mit dem Shore-Durometer, umfassend die folgenden Teilschritte für jede lokale Erhöhung: a) Positionieren des Shore-Durometers senkrecht zur beabstandeten Oberfläche (12) der jeweiligen lokalen Erhöhung; b) Gleichmässiges Drücken des senkrecht positionierten Shore-Durometers gegen die beabstandete Oberfläche (12) der jeweiligen lokalen Erhöhung solange, bis die vom Shore-Durometer bereitgestellte lokale Shore-Härte im Wesentlichen konstant ist; c) Ablesen des vom Shore-Durometer bereitgestellten im Wesentlichen konstanten Werts der lokalen Shore-Härte der jeweiligen lokalen Erhöhung (11); und
3) Bestimmen, insbesondere durch eine Mittelwertbildung, der Shore-Härte des Verbindungsabschnitts (3) basierend auf der gemessenen mindestens einen lokalen Shore-Härte, und optional Erfassen der während des Messens in Verfahrensschritt 2) vorliegenden Temperatur im äusseren Bereich (8) ausserhalb des Verbindungsabschnitts (3).

15. Kompensatorsystem, aufweisend 1) einen Kompensator (1, 13) gemäss einem der Ansprüche 1 bis 13, 2) ein Instruktionsblatt, aufweisend Instruktionen zum Verfahren gemäss Anspruch 14, und optional 3) einen Shore-Durometer, insbesondere einen Shore-Durometer vom Typ A gemäss Standard ASTM D2240-15(2021).
